# EUROPEAN PATENT APPLICATION

(11) **EP 3 496 396 A1**
(43) Date of publication of application: **12.06.2019**
(21) Application number: 17836347.9
(22) Date of filing: 28.07.2017
(51) Int. Cl.: H04N 7/18

(54) **METHOD AND DEVICE FOR STORING WARNING IMAGE**

(30) Priority: 03.08.2016 CN 201610626351
(71) Applicant: Hangzhou Ezviz Software Co., Ltd., Binjiang District Hangzhou, Zhejiang 310051 (CN)
(72) Inventor: CHEN, Guanlan, Hangzhou Zhejiang 310051 (CN); LI, Yinbing, Hangzhou Zhejiang 310051 (CN); SU, Hui, Hangzhou Zhejiang 310051 (CN); JIN, Shengyang, Hangzhou Zhejiang 310051 (CN); DU, Anqiang, Hangzhou Zhejiang 310051 (CN)
(74) Representative: IPAZ
(86) International application number: PCT/CN2017/094952
(87) International publication number: WO 2018/024165

(57) **Abstract**

The embodiments of the present application provide an alarm image recording method and apparatus, the method includes: capturing a picture according to a preset frequency, and caching the picture captured each time to a buffer of the video capture device; extracting, after a preset time period since when occurrence of an event meeting an alarm condition is detected, at least two pictures from the buffer according to a time point at which the event occurs; determining the at least two pictures as alarm images and saving to the video capture device or a cloud storage server. In the present application, since the alarm image including at least two pictures may provide more abundant information than an alarm image including a single picture, the completeness of presenting the event by the alarm image can be improved. Compared with the alarm image including a video, the amount of data is reduced by at least an order of magnitude, thus reducing data amount of the alarm image. Therefore, the alarm image including at least two pictures can improves the completeness of presenting the event while reducing the data amount of the alarm image, and achieves a better recording effect.

## Description

The present application claims the priority to a Chinese Patent Application No. 201610626351.2, filed with the China National Intellectual Property Administration on August 03, 2016 and entitled "METHOD AND DEVICE FOR STORING WARNING IMAGE", which is incorporated herein by reference in its entirety.

### Technical Field

The present application generally relates to the field of video monitoring technology, and in particular, to an alarm image recording method and apparatus.

### Background

At present, there are many video capture devices with an alarm function. When an event that meets the alarm condition is detected, the video capture device records the alarm image to present the event to the user.

In the related art, a video capture device locally caches the collected video, and when an event that meets the alarm condition is detected, the video capture device sends alarm information to the video monitoring server that is communicatively connected to the video capture device. After a preset time period, the video corresponding to the time period before and after the time point of the locally cached event is determined as an alarm image, and then the determined video is saved to the video capture device or a cloud storage server; alternatively, when an event that meets the alarm condition is detected, a video capture device sends alarm information to the video monitoring server that is communicatively connected to the video capture device, and captures a picture to be saved to the video capture device or a cloud storage server as an alarm image. Correspondingly, after receiving the alarm information, the video monitoring server sends an alarm related information to the client that is communicatively connected to the video monitoring server, and after receiving the alarm related information, the client may request for viewing the corresponding alarm image (video or picture) from the video capture device or the cloud storage server.

In the case that the alarm image recorded by the video capture device is a video that has large amount of data, if the video is to be saved to the video capture device, the storage space occupied by the video will be large, which causes a large storage cost. In the case that the video is saved to the cloud storage server, when the client requests for viewing the video, the transmission speed of the video transmission to the client may be slow due to the limitation of the network bandwidth. When the alarm image recorded by the video capture device is a single picture, the entire process of the event cannot be accurately presented. Therefore, the above two methods for recording an alarm image have a poor recording effect.

### Summary

The purpose of the embodiments of the present application is to provide an alarm image recording method and apparatus, which can reduce the data amount of the alarm image and improve the completeness of presenting the event, thereby achieving a better recording effect. The specific technical solutions are as follows.

An alarm image recording method, which is applicable in a video capture device, includes:
capturing pictures with a preset frequency, and caching the captured pictures to a buffer of the video capture device;
extracting, after a preset time period since when occurrence of an event meeting an alarm condition is detected, at least two pictures from the buffer according to a time point at which the event occurs;
determining the at least two pictures as an alarm image and saving the alarm image to the video capture device or a cloud storage server.

Optionally, extracting at least two pictures from the buffer according to a time point at which the event occurs includes:
determining whether there is a target picture in the buffer, wherein the target picture is a picture that is captured at the time point at which the event occurs;
when the determination result is YES, extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs; when the determination result is NO, extracting the first predetermined number of pictures and the second predetermined number of pictures from the buffer.

Optionally, extracting at least two pictures from the buffer according to the time point at which the event occurs includes:
extracting, from the buffer, at least two pictures, wherein time intervals between identification information corresponding to the at least two pictures and the time point at which the event occurs are within a predetermined range.

Optionally, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

Optionally, the first predetermined number is one, and the second predetermined number is three, and wherein the second predetermined number of pictures are pictures that are sequentially captured.

An alarm image recording apparatus, which is applicable in a video capture device, includes:
a caching module, configured for capturing pictures with a preset frequency, and caching the captured pictures to a buffer of the video capture device;
an extracting module, configured for extracting, after a preset time period since when occurrence of an event meeting an alarm condition is detected, at least two pictures from the buffer according to a time point at which the event occurs; and
a saving module, configured for determining the at least two pictures as an alarm image and saving the alarm image to the video capture device or a cloud storage server.

Optionally, the extracting module includes:
a determination unit, configured for, after a preset time period from a time point at which an event meeting the alarm condition occurs is detected, determining whether there is a target picture in the buffer, wherein the target picture is a picture that is captured at the time point at which the event occurs; if yes, triggering a first extraction unit, and if not, triggering a second extraction unit;
the first extraction unit is configured for extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs;
the second extraction unit is configured for extracting the first predetermined number of pictures and the second predetermined number of pictures from the buffer.

Optionally, the extracting module is specifically configured for:
extracting, after a preset time period since when occurrence of an event meeting an alarm condition is detected, at least two pictures, wherein time intervals between identification information corresponding to the at least two pictures and the time point at which the event occurs are within a predetermined range.

Optionally, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

Optionally, the first predetermined number is one, and the second predetermined number is three, and wherein the second predetermined number of pictures are pictures that are sequentially captured.

To achieve the above purpose, an embodiment of the present application further provides an electronic device, including: a processor, a communication interface, a memory, and a communication bus, wherein the processor, the communication interface, and the memory are communicated with each other via the communication bus,
the memory is configured for storing a computer program;
the processor, when executing the program stored on the memory, implements the following operations:
capturing pictures with a preset frequency, and caching the captured pictures to a buffer of the video capture device;
extracting, after a preset time period since when occurrence of an event meeting an alarm condition is detected, at least two pictures from the buffer according to a time point at which the event occurs;
determining the at least two pictures as an alarm image and saving the alarm image to the video capture device or a cloud storage server.

In an implementation of the present application, extracting at least two pictures from the buffer according to a time point at which the event occurs includes:
determining whether there is a target picture in the buffer, wherein the target picture is a picture that is captured at the time point at which the event occurs;
when the determination result is YES, extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs; when the determination result is NO, extracting the first predetermined number of pictures and the second predetermined number of pictures from the buffer.

In an implementation of the present application, extracting at least two pictures from the buffer according to the time point at which the event occurs includes:
extracting, from the buffer, at least two pictures, wherein time intervals between identification information corresponding to the at least two pictures and the time point at which the event occurs are within a predetermined range.

In an implementation of the present application, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

In an implementation of the present application, the first predetermined number is one, and the second predetermined number is three, and wherein the second predetermined number of pictures are pictures that are sequentially captured.

To achieve the above purpose, an embodiment of the present application further provides a computer readable storage medium with a computer program stored thereon, wherein the computer program is configured to implement the following operations when being executed by a processor:
capturing pictures with a preset frequency, and caching the captured pictures to a buffer of the video capture device;
extracting, after a preset time period since when occurrence of an event meeting an alarm condition is detected, at least two pictures from the buffer according to a time point at which the event occurs;
determining the at least two pictures as an alarm image and saving the alarm image to the video capture device or a cloud storage server.

In an implementation of the present application, extracting at least two pictures from the buffer according to a time point at which the event occurs includes:
determining whether there is a target picture in the buffer, wherein the target picture is a picture that is captured at the time point at which the event occurs;
when the determination result is YES, extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs; when the determination result is NO, extracting the first predetermined number of pictures and the second predetermined number of pictures from the buffer.

In an implementation of the present application, extracting at least two pictures from the buffer according to the time point at which the event occurs includes:
extracting, from the buffer, at least two pictures, wherein time intervals between identification information corresponding to the at least two pictures and the time point at which the event occurs are within a predetermined range.

In an implementation of the present application, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

In an implementation of the present application, the first predetermined number is one, and the second predetermined number is three, and wherein the second predetermined number of pictures are pictures that are sequentially captured.

In the embodiments of the present application, by the means of capturing pictures with a preset frequency, and caching the captured pictures to a buffer of the video capture device; extracting, after a preset time period since when occurrence of an event meeting an alarm condition is detected, at least two pictures from the buffer according to a time point at which the event occurs; the at least two pictures are determined as an alarm image and saved to the video capture device or a cloud storage server. Since the alarm image including at least two pictures may provide more abundant information than an alarm image including a single picture, the completeness of presenting the event by the alarm image can be improved. Compared with the alarm image including a video, the amount of data is reduced by at least an order of magnitude, thus reducing data amount of the alarm image. Therefore, the alarm image including at least two pictures can improves the completeness of presenting the event while reducing the data amount of the alarm image, and achieves a better recording effect. Of course, implementing any product or method of the present application necessarily does not necessarily require all of the advantages described above to be achieved at the same time.

### Brief Description of the Drawings

In order to describe the technical solutions of embodiments of the present application and of the related art more clearly, a simple introduction of the drawings required in the description of the embodiments and of the related art will be given. Obviously, the drawings described below are just for some embodiments of the present application and other drawings may be obtained by those of ordinary skills in the art based on these drawings without any creative effort.
FIG. 1 is a first flow chart of an alarm image recording method according to an embodiment of the present application;
FIG. 2 is a second flow chart of an alarm image recording method according to an embodiment of the present application;
FIG. 3 is a first schematic structural diagram of an alarm image recording apparatus according to an embodiment of the present application;
FIG. 4 is a second schematic structural diagram of an alarm image recording apparatus according to an embodiment of the present application;
FIG. 5 is a schematic structural diagram of an electronic device according to an embodiment of the present application.

### Detailed Description

The embodiments of the present application will now be described in conjunction with the accompanying drawings in the embodiments of the present application, and it will be apparent that the described embodiments are only part of the embodiments of the present application and not all of the embodiments. Based on the embodiments of the present application, all other embodiments obtained by those of ordinary skill in the art without making creative work are within the scope of this application.

In order to solve the related technical problem, the embodiments of the present application provide an alarm image recording method and apparatus.

An alarm image recording method according to an embodiment of the present application is first introduced.

It should be noted that the alarm image recording method according to an embodiment of the present application may be applied in a video capture device. In practical applications, the video capture device may be an IPC (IP Camera) or NVR (Network Video Recorder), which is reasonable.

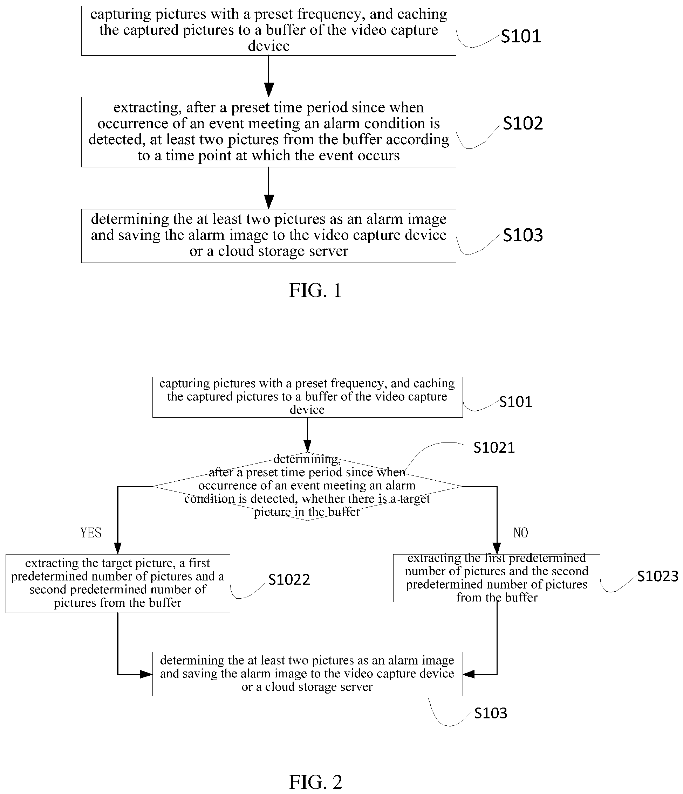

As shown in FIG. 1, an alarm image recording method according to an embodiment of the present application, which may be applied in a video capture device, may include:
S101, capturing pictures with a preset frequency, and caching the captured pictures to a buffer of the video capture device.

When the alarm image recorded by the video capture device is a video, since the video data is large, if the video is saved to the video capture device, the storage space occupied by the video is large, which causes a large storage cost. If the video is saved to the cloud storage server, when the client requests for viewing the video, the transmission speed of the video transmission to the client may be slow due to the limitation of the network bandwidth. When the alarm image recorded by the video capture device is a single picture, the entire process of the event cannot be accurately presented.

Therefore, in order to improve the recording of a video, when the video capture device is activated, a buffer is allocated in the video capture device. Then, pictures are captured with a preset frequency, and the captured pictures are cached to the buffer for the subsequent processes.

The preset frequency may be determined according to the location of the video capture device.

S102, extracting, after a preset time period since when occurrence of an event meeting an alarm condition is detected, at least two pictures from the buffer according to a time point at which the event occurs.

Since the pictures are captured with a preset frequency and the captured pictures are cached to the buffer, there are more than one captured pictures in the buffer. In order to obtain more information about the event that meets the alarm condition, after a preset time period since when occurrence of an event meeting an alarm condition is detected, at least two pictures are extracted from the plurality of captured pictures in the buffer according to a time point at which the event occurs.

S103, determining the at least two pictures as an alarm image and saving the alarm image to the video capture device or a cloud storage server.

The at least two pictures extracted from the buffer are determined as an alarm image and saved to the video capture device or a cloud storage server, so that when the client want to view the alarm image, the client can request for viewing the alarm image from the video capture device or the cloud storage server.

In order to ensure the security and reliability of the alarm image, the alarm image may be encrypted according to a preset algorithm, and then the encrypted alarm image is saved to the video capture device or the cloud storage server.

Since the size of a video is generally tens of megabytes, the size of a single picture is generally several kilobytes to tens of kilobytes, compared with an alarm image including a video, the alarm image containing at least two pictures is reduced by at least one order of magnitude in the amount of data; and, compared with an alarm image including a single picture, the information provided is more abundant, which can present the event more completely.

In the embodiments of the present application, by the means of capturing pictures with a preset frequency, and caching the captured pictures to a buffer of the video capture device; extracting, after a preset time period since when occurrence of an event meeting an alarm condition is detected, at least two pictures from the buffer according to a time point at which the event occurs; the at least two pictures are determined as an alarm image and saved to the video capture device or a cloud storage server. Since the alarm image including at least two pictures may provide more abundant information than an alarm image including a single picture, the completeness of presenting the event by the alarm image can be improved. Compared with the alarm image including a video, the amount of data is reduced by at least an order of magnitude, thus reducing data amount of the alarm image. Therefore, the alarm image including at least two pictures can improves the completeness of presenting the event while reducing the data amount of the alarm image, and achieves a better recording effect.

For facilitating understanding of the present application, the method shown in FIG. 1 is described in detail below through a specific embodiment:
For example: the preset frequency is set to 1 time / 1min, and assuming that the capturing of pictures starts from 8:00 am, an event meeting the alarm condition occurs at 8:05 am.

Pictures are captured with a frequency of 1 time / 1min, and the captured pictures (a picture captured at 8:01am, a picture captured at 8:02am and a picture captured at 8:03am, ...) are cached to a buffer of the video capture device; after a preset time period since when occurrence of an event meeting an alarm condition is detected, at least two pictures are extracted from the buffer according to a time point (8:05am) at which the event occurs; the at least two pictures are determined as an alarm image and saved to the video capture device or a cloud storage server.

Further, an interaction process among the video capture device, the client, the cloud storage server, and the video monitoring server, according to the alarm image recording method of the present application, is described in detail below.

The video capture device captures pictures with a preset frequency, and caches the captured pictures to a buffer of the video capture device; when an event meeting the alarm condition occurs is detected, sends alarm information to the video monitoring server that is communicatively connected to the video capture device.

After a preset time period, the video capture device extracts at least two pictures from the buffer according to the time point at which the event occurs, and determines the at least two pictures as an alarm image and saves the alarm image to the video capture device or the cloud storage server.

After receiving the alarm information, the video monitoring server sends an alarm related information to the client that is communicatively connected to the video monitoring server; and after receiving the alarm related information, the client may request for viewing the corresponding alarm image (including at least two pictures) from the video capture device or the cloud storage server.

Thus, the user can view an alarm image including at least two pictures.

Since the alarm image including at least two pictures may provide more abundant information than an alarm image including a single picture, the completeness of presenting the event by the alarm image can be improved. Compared with the alarm image including a video, the amount of data is reduced by at least an order of magnitude, thus reducing data amount of the alarm image. Therefore, the alarm image including at least two pictures can improves the completeness of presenting the event while reducing the data amount of the alarm image, and achieves a better recording effect.

It should be noted that there are various implementation for extracting, after a preset time period since when occurrence of an event meeting an alarm condition is detected, at least two pictures from the buffer according to a time point at which the event occurs, which will be described below by examples.

In an implementation, as shown in FIG. 2, extracting, after a preset time period since when occurrence of an event meeting an alarm condition is detected, at least two pictures from the buffer according to a time point at which the event occurs (S102) may include:
S1021: determining, after a preset time period since when occurrence of an event meeting an alarm condition is detected, whether there is a target picture in the buffer; if YES, performing step S1022, if NO, performing step S1023,
wherein the target picture is a picture that is captured at a time point at which the event occurs.

Since the pictures are captured with a preset frequency, and the captured pictures are cached to the buffer, the time at which an event meeting the alarm condition occurs is not fixed. Therefore, when an event meeting the alarm condition occurs, the video capture device may fail to capture a picture (i.e., a target picture) at the time point at which the event meeting the alarm condition occurs. At this point, the target picture does not necessarily exist in the buffer.

Therefore, after a preset time period since when occurrence of an event meeting an alarm condition is detected, it is determined whether there is a target picture in the buffer, and the subsequent steps are performed according to the determination result.

S1022: extracting the target picture, a first predetermined number of pictures and a second predetermined number of pictures from the buffer.

The first predetermined number of pictures are captured before the time point at which the event occurs, and the second predetermined number of pictures are captured after the time point at which the event occurs.

When it is determined that there is a target picture in the buffer, that is, there is a picture in the buffer that is captured at the time point at which the event occurs, the target picture is extracted. In order to obtain more information about the event that meets the alarm condition, a first predetermined number of pictures and a second predetermined number of pictures are extracted from the buffer.

Specifically, the first predetermined number of pictures include at least: a picture that is captured at a time point closest to the time point at which the event occurs, among the pictures that are captured at time points before the time point at which the event occurs;
the second predetermined number of pictures include at least: a picture that is captured at a time point closest to the time point at which the event occurs, among the pictures that are captured at time points after the time point at which the event occurs.

In order to clearly understand the context of the event that meets the alarm condition, in the case that the target picture exists, the target picture can be used as a reference to extract at least one picture respectively before and after immediately the target picture.

For example: the preset frequency is set to 1 time / 1min, and assuming that capturing of pictures starts from 8:00 am, and the event meeting the alarm condition occurs at 8:05 am.

Pictures are captured with a frequency of 1 time / 1min, and the captured pictures (a picture captured at 8:01, a picture captured at 8:02 and a picture captured at 8:03, ...) are cached to a buffer of the video capture device; after a preset time period since when occurrence of an event meeting an alarm condition is detected, it is determined whether there is a target picture (the picture captured at 8:05) in the buffer; if YES, the picture captured at 8:05 am is extracted, and a first predetermined number of pictures including at least the picture captured at 8:04 am and a second predetermined number of pictures including at least the picture captured at 8:06 am are extracted from the buffer.

Specifically, the first predetermined number is one, and the second predetermined number is three.

The second predetermined number of pictures are pictures that are sequentially captured.

Since the pictures captured after the event that meets the alarm condition occurs contain more important information than the pictures captured before the event that meets the alarm condition occurs, thus the second predetermined number is set to be greater than the first predetermined number. Specifically, the first predetermined number is set to one, and the second predetermined number is set to three.

The second predetermined number of pictures are pictures that are sequentially captured. Herein, sequentially capturing means that, after capturing a picture with the preset frequency, the next picture is continuously captured. For example, the preset frequency is set to 1 time/1min, and assuming that the capturing of pictures starts from 8:00 am, the captured pictures include a picture captured at 8:01 am, a picture captured at 8:02 am, a picture captured at 8:03 am, ... , and the picture captured at 8:01 am, the picture captured at 8:02 am and the picture captured at 8:03 am are pictures that are sequentially captured.

For example: the preset frequency is set to 1 time/1min, assuming that capturing of pictures starts from 8:00 am, the event meeting the alarm condition occurs at 8:05 am; the first predetermined number is set to one, and the second predetermined number is set to three.

Pictures are captured with a frequency of 1 time/1min, and the captured pictures (a picture captured at 8:01 am, a picture captured at 8:02 am and a picture captured at 8:03 am, ...) are cached to a buffer of the video capture device; after a preset time period since when occurrence of an event meeting an alarm condition is detected, it is determined whether there is a target picture (i.e., a picture captured at 8:05) in the buffer; if YES, the picture captured at 8:04 am, the picture captured at 8:05 am, the picture captured at 8:06 am, the picture captured at 8:07 am and the picture captured at 8:08 am are extracted from the buffer.

S1023: extracting the first predetermined number of pictures and the second predetermined number of pictures from the buffer.

When it is determined that there is no target picture in the buffer, that is, there is no picture in the buffer that is captured at the time point at which the event occurs, in order to obtain more information about the event that meets the alarm condition, a first predetermined number of pictures and a second predetermined number of pictures are extracted from the buffer.

Therefore, after a preset time period since when occurrence of an event meeting an alarm condition is detected, at least two pictures related to the event meeting the alarm condition may be flexibly extracted from the buffer by determining whether there is a target picture in the buffer.

In another implementation of the present application, extracting at least two pictures from the buffer according to the time point at which the event occurs may include:
extracting, from the buffer, at least two pictures, wherein time intervals between the identification information corresponding to the at least two pictures and the time point at which the event occurs are within a predetermined range.

In order to obtain information about the event that meets the alarm condition, at least two pictures may be extracted from the buffer, wherein the time intervals between the identification information corresponding to the at least two pictures and the time point at which the event occurs are within a predetermined range. When there is a picture in the buffer whose corresponding identification information is the same as the time point at which the event occurs, the time interval between the corresponding identification information and the time point at which the event occurs is 0, which must be within the predetermined range. Therefore, the pictures, wherein the time intervals between the identification information corresponding to the pictures and the time point at which the event occurs are within a predetermined range, include pictures whose corresponding identification information is the same as the time point at which the event occurs.

For example: the preset frequency is set to 1 time/1min, assuming that capturing of pictures starts from 8:00 am, the event meeting the alarm condition occurs at 8:05 am, the predetermined range is two minutes.

Pictures are captured with a frequency of 1 time / 1min, and the captured pictures (the picture captured at 8:01, the picture captured at 8:02 and the picture captured at 8:03, ...) are cached to a buffer of the video capture device; after a preset time period since when occurrence of an event meeting an alarm condition is detected, when there is a picture captured at 8:05 am in the buffer, at least two pictures may be extracted, from the buffer, from the picture captured at 8:05 am and the pictures captured within 2 minutes before/after 8:05 am. When there is no picture captured at 8:05 am in the buffer, at least two pictures may be extracted from the pictures captured within 2 minutes before/after 8:05.

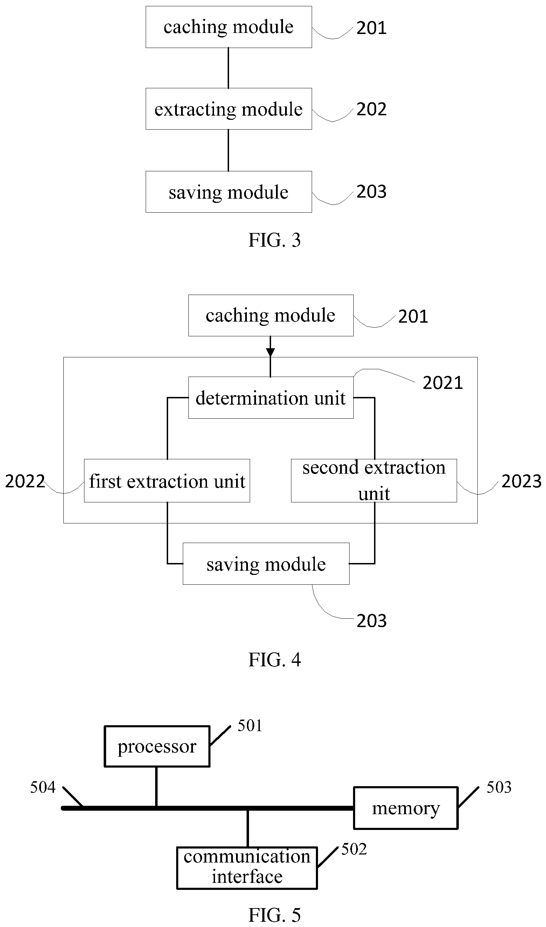

With respect to the foregoing method embodiments, an embodiment of the present application further provides an alarm image recording apparatus, which is applicable in a video capture device. As shown in FIG. 3, the apparatus may include:
a caching module 201, configured for capturing pictures with a preset frequency, and caching the captured pictures to a buffer of the video capture device;
an extracting module 202, configured for extracting, after a preset time period since when occurrence of an event meeting an alarm condition is detected, at least two pictures from the buffer according to a time point at which the event occurs; and
a saving module 203, configured for determining the at least two pictures as an alarm image and saving the alarm image to the video capture device or a cloud storage server.

In the embodiments of the present application, by the means of capturing pictures with a preset frequency, and caching the captured pictures to a buffer of the video capture device; extracting, after a preset time period since when occurrence of an event meeting an alarm condition is detected, at least two pictures from the buffer according to a time point at which the event occurs; the at least two pictures are determined as an alarm image and saved to the video capture device or a cloud storage server. Since the alarm image including at least two pictures may provide more abundant information than an alarm image including a single picture, the completeness of presenting the event by the alarm image can be improved. Compared with the alarm image including a video, the amount of data is reduced by at least an order of magnitude, thus reducing data amount of the alarm image. Therefore, the alarm image including at least two pictures can improves the completeness of presenting the event while reducing the data amount of the alarm image, and achieves a better recording effect.

Specifically, the extracting module 202 is specifically configured for:
extracting, after a preset time period since when occurrence of an event meeting an alarm condition is detected, from the buffer, at least two pictures, wherein time intervals between identification information corresponding to the at least two pictures and the time point at which the event occurs are within a predetermined range.

Further, as shown in FIG. 4, an embodiment of the present application provides an alarm image recording apparatus, which is applicable in a video capture device. The apparatus may include:
a caching module 201, configured for capturing pictures with a preset frequency, and caching the captured pictures to a buffer of the video capture device;
a determination unit 2021, configured for, after a preset time period since when occurrence of an event meeting an alarm condition is detected, determining whether there is a target picture in the buffer, wherein the target picture is a picture that is captured at the time point at which the event occurs; if yes, triggering a first extraction unit 2022, and if not, triggering a second extraction unit 2023;
the first extraction unit 2022 is configured for extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs;
the second extraction unit 2023 is configured for extracting the first predetermined number of pictures and the second predetermined number of pictures from the buffer.

The saving module 203 is configured for determining the at least two pictures as an alarm image and saving the alarm image to the video capture device or a cloud storage server.

Therefore, after a preset time period since when occurrence of an event meeting an alarm condition is detected, at least two pictures related to the event meeting the alarm condition may be flexibly extracted from the buffer by determining whether there is a target picture in the buffer.

Specifically, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

Specifically, the first predetermined number is one, and the second predetermined number is three, and wherein the second predetermined number of pictures are pictures that are sequentially captured.

As shown in FIG. 5, an embodiment of the present application further provides an electronic device, including: a processor 501, a communication interface 502, a memory 503, and a communication bus 504, wherein the processor 501, the communication interface 502, and the memory 503 are communicated with each other via the communication bus 504,
the memory 503 is configured for storing a computer program;
the processor 501 is configured to implement the foregoing alarm image recording method, when executing the program stored on the memory 503, and the method includes:
capturing pictures with a preset frequency, and caching the captured pictures to a buffer of the video capture device;
extracting, after a preset time period since when occurrence of an event meeting an alarm condition is detected, at least two pictures from the buffer according to a time point at which the event occurs;
determining the at least two pictures as an alarm image and saving the alarm image to the video capture device or a cloud storage server.

In an implementation manner of the present application, extracting at least two pictures from the buffer according to the time point at which the event occurs includes:
determining whether there is a target picture in the buffer, wherein the target picture is a picture that is captured at the time point at which the event occurs;
when the determination result is YES, extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs; when the determination result is NO, extracting the first predetermined number of pictures and the second predetermined number of pictures from the buffer.

In an implementation manner of the present application, extracting at least two pictures from the buffer according to the time point at which the event occurs includes:
extracting, from the buffer, at least two pictures, wherein time intervals between identification information corresponding to the at least two pictures and the time point at which the event occurs are within a predetermined range.

In an implementation of the present application, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

In an implementation of the present application, the first predetermined number is one, and the second predetermined number is three, and wherein the second predetermined number of pictures are pictures that are sequentially captured.

In the embodiments of the present application, by the means of capturing pictures with a preset frequency, and caching the captured pictures to a buffer of the video capture device; extracting, after a preset time period since when occurrence of an event meeting an alarm condition is detected, at least two pictures from the buffer according to a time point at which the event occurs; the at least two pictures are determined as an alarm image and saved to the video capture device or a cloud storage server. Since the alarm image including at least two pictures may provide more abundant information than an alarm image including a single picture, the completeness of presenting the event by the alarm image can be improved. Compared with the alarm image including a video, the amount of data is reduced by at least an order of magnitude, thus reducing data amount of the alarm image. Therefore, the alarm image including at least two pictures can improves the completeness of presenting the event while reducing the data amount of the alarm image, and achieves a better recording effect.

An embodiment of the present application further provides a computer readable storage medium with a computer program stored therein, and when the computer program is executed by the processor, the above alarm image recording method is implemented, and the method includes:
capturing pictures with a preset frequency, and caching the captured pictures to a buffer of the video capture device;
extracting, after a preset time period since when occurrence of an event meeting an alarm condition is detected, at least two pictures from the buffer according to a time point at which the event occurs;
determining the at least two pictures as an alarm image and saving the alarm image to the video capture device or a cloud storage server.

In an implementation manner of the present application, extracting at least two pictures from the buffer according to a time point at which the event occurs includes:
determining whether there is a target picture in the buffer, wherein the target picture is a picture that is captured at the time point at which the event occurs;
when the determination result is YES, extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs; when the determination result is NO, extracting the first predetermined number of pictures and the second predetermined number of pictures from the buffer.

In an implementation of the present application, extracting at least two pictures from the buffer according to the time point at which the event occurs includes:
extracting, from the buffer, at least two pictures, wherein time intervals between identification information corresponding to the at least two pictures and the time point at which the event occurs are within a predetermined range.

In an implementation of the present application, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

In an implementation of the present application, the first predetermined number is one, and the second predetermined number is three, and wherein the second predetermined number of pictures are pictures that are sequentially captured.

In the embodiments of the present application, by the means of capturing pictures with a preset frequency, and caching the captured pictures to a buffer of the video capture device; extracting, after a preset time period since when occurrence of an event meeting an alarm condition is detected, at least two pictures from the buffer according to a time point at which the event occurs; the at least two pictures are determined as an alarm image and saved to the video capture device or a cloud storage server. Since the alarm image including at least two pictures may provide more abundant information than an alarm image including a single picture, the completeness of presenting the event by the alarm image can be improved. Compared with the alarm image including a video, the amount of data is reduced by at least an order of magnitude, thus reducing data amount of the alarm image. Therefore, the alarm image including at least two pictures can improves the completeness of presenting the event while reducing the data amount of the alarm image, and achieves a better recording effect.

It should be noted that, the relationship terms herein such as "first", "second" and the like are only used to distinguish one entity or operation from another entity or operation, but do not necessarily require or imply that there is actual relationship or order between these entities or operations. Moreover, the terms "include", "comprise" or any other variants thereof are intended to cover a non-exclusive inclusion, such that processes, methods, articles, or devices comprising a series of elements comprise not only those elements listed but also those not specifically listed or the elements intrinsic to these processes, methods, articles, or equipment. Without further limitations, elements defined by the sentences "comprise(s) a ..." or "include(s) a ..." do not exclude that there are other identical elements in the processes, methods, articles, or devices which comprise these elements.

The embodiments in the specification are all described in related manners, and the same or similar parts among the embodiments may refer to each other, and each embodiment focuses on the difference from other embodiments. In particular, for the embodiment of the alarm image recording apparatus shown in FIG. 3, the electronic device embodiment shown in FIG. 5, and the computer readable storage medium embodiment, since they are basically similar to the embodiment of the alarm image recording method shown in FIG. 1, the description is relatively simple, and the relevant portions can be referred to the description of the embodiment of the alarm image recording method shown in FIG. 1.

The above description is only the preferred embodiments of the present application and is not intended to limit the protection scope of the present application. Any amendments, equivalent substitutions, improvements etc. made within the spirit and principle of the present application are all included in the protection scope of the present application.

## Claims

1. An alarm image recording method, which is applicable in a video capture device, comprising:
capturing pictures with a preset frequency, and caching the captured pictures to a buffer of the video capture device;
extracting, after a preset time period since when occurrence of an event meeting an alarm condition is detected, at least two pictures from the buffer according to a time point at which the event occurs;
determining the at least two pictures as an alarm image and saving the alarm image to the video capture device or a cloud storage server.

2. The method of claim 1, wherein, extracting at least two pictures from the buffer according to a time point at which the event occurs comprises:
determining whether there is a target picture in the buffer, wherein the target picture is a picture that is captured at the time point at which the event occurs;
when the determination result is YES, extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs; when the determination result is NO, extracting the first predetermined number of pictures and the second predetermined number of pictures from the buffer.

3. The method of claim 1, wherein, extracting at least two pictures from the buffer according to the time point at which the event occurs comprises:
extracting, from the buffer, at least two pictures, wherein time intervals between identification information corresponding to the at least two pictures and the time point at which the event occurs are within a predetermined range.

4. The method of claim 2, wherein, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

5. The method of claim 4, wherein, the first predetermined number is one, and the second predetermined number is three, and wherein the second predetermined number of pictures are pictures that are sequentially captured.

6. An alarm image recording apparatus, which is applicable in a video capture device, comprising:
a caching module, configured for capturing pictures with a preset frequency, and caching the captured pictures to a buffer of the video capture device;
an extracting module, configured for extracting, after a preset time period since when occurrence of an event meeting an alarm condition is detected, at least two pictures from the buffer according to a time point at which the event occurs; and
a saving module, configured for determining the at least two pictures as an alarm image and saving the alarm image to the video capture device or a cloud storage server.

7. The apparatus of claim 6, wherein, the extracting module comprises:
a determination unit, configured for, after a preset time period since when occurrence of an event meeting an alarm condition is detected, determining whether there is a target picture in the buffer, wherein the target picture is a picture that is captured at the time point at which the event occurs; if yes, triggering a first extraction unit, and if not, triggering a second extraction unit;
the first extraction unit is configured for extracting the target picture, a first predetermined number of pictures and a second predetermined number of pictures from the buffer, wherein, the first predetermined number of pictures are pictures that are captured before the time point at which the event occurs, and the second predetermined number of pictures are pictures that are captured after the time point at which the event occurs;
the second extraction unit is configured for extracting the first predetermined number of pictures and the second predetermined number of pictures from the buffer.

8. The apparatus of claim 6, wherein, the extracting module is further configured for:
extracting, after a preset time period since when occurrence of an event meeting an alarm condition is detected, from the buffer, at least two pictures, wherein time intervals between identification information corresponding to the at least two pictures and the time point at which the event occurs are within a predetermined range.

9. The apparatus of claim 7, wherein, the first predetermined number of pictures comprise at least: a picture that is captured at a time point closest to the time point at which the event occurs among pictures that are captured before the time point at which the event occurs;
the second predetermined number of pictures comprise at least: a picture that is captured at a time point closest to the time point at which the event occurs among pictures that are captured after the time point at which the event occurs.

10. The apparatus of claim 9, wherein, the first predetermined number is one, and the second predetermined number is three, and wherein the second predetermined number of pictures are pictures that are sequentially captured.

11. An electronic device, comprising: a processor, a communication interface, a memory, and a communication bus, wherein the processor, the communication interface, and the memory are communicated with each other via the communication bus;
the memory is configured for storing a computer program;
the processor is configured for, when executing the program stored on the memory, implementing the method of any one of claims 1-5.

12. A computer readable storage medium with a computer program stored thereon, wherein the computer program is configured to implement the method of any one of claims 1-5 when being executed by a processor.
